# EUROPÄISCHE PATENTSCHRIFT

(11) **EP 0 600 362 B1**
(45) Veröffentlichungstag und Bekanntmachung des Hinweises auf die Patenterteilung: **02.04.1997**
(21) Anmeldenummer: 93118913.8
(22) Anmeldetag: 24.11.1993
(51) Int. Cl.: H05B 7/11, H05B 7/06

(54) **Gleichstrom-Lichtbogenofen und Verfahren zu dessen Betreibung**
DC arc furnace and operation method
Four à arc à courant continu et procédé de commande

(30) Priorität: 04.12.1992 DE 4240891
(43) Veröffentlichungstag der Anmeldung: 08.06.1994
(73) Patentinhaber: VOEST-ALPINE Industrieanlagenbau GmbH, 4031 Linz (AT)
(72) Erfinder: Nix, Edgar, D-40880 Ratingen (DE)
(74) Vertreter: Pfenning, Meinig & Partner

(56) Entgegenhaltungen:
- EP-A- 0 473 809
- EP-A- 0 474 883
- DE-A- 4 025 084
- DE-A- 4 035 233
- GB-A- 2 143 110
- PATENT ABSTRACTS OF JAPAN vol. 15, no. 81 (M-1086)25. Februar 1991 & JP-A-02 302 581 (DAIDO STEEL CO.) 14. Dezember 1990
- ABB REVIEW Bd. 10 , Oktober 1992 , ZURICH, CH Seiten 3 - 10 S-E STENKVIST ET AL. 'The DC arc furnace - a low cost melting unit'

## Beschreibung

Die Erfindung bezieht sich auf einen Gleichstrom-Lichtbogenofen gemäß Oberbegriff des Patentanspruches 1 und auf ein Verfahren zum Betreiben eines solchen Lichtbogenofens gemäß dem Verfahrensanspruch.

Für das Einschmelzen von metallischen Materialien in einem mit Gleichstrom betriebenen Lichtbogenofen sind insbesondere bei leistungsstarken Öfen hohe Stromstärken erforderlich, die Ursache für die Ausbildung entsprechend starker Magnetfelder sind. Derartige Gleichstrom-Lichtbogenöfen kennzeichnen sich hinsichtlich des über den Lichtbogen kurzgeschlossenen Gleichstromkreises im wesentlichen durch eine seitlich neben dem Ofengefäß aufgestellte Gleichrichteranordnung, von der aus in einer waagerechten unteren Ebene ein oder mehrere anodische Stromzuleitungen unterhalb des Gefäßbodens zu dessen Mitte geführt sind, so daß der Stromfluß von dort über die Bodenanode sowie das Schmelzmaterial im Gefäß und den Lichtbogen zu der mittig in der Gefäßabdeckung gehaltenen Kathode geführt werden kann, über deren Tragarm der Stromkreis im Rückfluß zu der Gleichrichter-Stromversorgung geschlossen ist.

Diese Anordnung von Stromzuführung und Stromableitung definiert eine Stromschleife, die eine senkrecht zu ihr gerichtete Kraftwirkung bedingt, welche die senkrecht verschiebbar in den Ofen ragende kathodische Elektrode zwar nicht beeinflußt, jedoch zu einer entsprechenden Auslenkung des Lichtbogens zwischen thode und Schmelzbad führt. Die Asymmetrie des Lichtbogens ist unmittelbare Ursache für einen erhöhten Verschleiß der ff-Zustellung des Ofengefäßes dort, wo der ausgelenkte Lichtbogen der Gefäßwand näher kommt, als durch seine zentrische Führung-beabsichtigt. Bei der vorstehend aufgezeigten Stromführung liegt dieser kritische Bereich erhöhten Verschleißes der Ausmauerung im Ofengefäß derjenigen Seite gegenüber bzw. von derjenigen Seite entfernt, von der die Stromzufuhr und -abfuhr des Gleichstrom-Lichtbogenofens erfolgt.

Um hier Abhilfe zu schaffen, wird beispielsweise bei einem bekannten Lichtbogenofen gemäß US 4,821,284 eine Dreifach-Stromleiterschleife über drei Bogenelektroden geschlossen, die um die Bodenmitte zentrisch und in Form eines gleichseitigen Dreiecks angeordnet sind, wobei diesen kopfseitige Elektroden oberhalb der Badoberfläche in gleicher Konfiguration den Bodenelektroden gegenüberstehen. Oberhalb und unterhalb des Ofenbereiches sind waagerechte Zu- und Abführungsschienen vorgesehen.

Ein noch bekannter Gleichstrom-Lichtbogenofen (DE 40 35 233 A1) besitzt nur eine einzige Bodenelektrode, die im Mittelpunkt des Bodens bis zur Schmleze geführt ist, wobei dieser Elektrode eine wiederum zentrisch zum Ofen gelagerte vertikal verschiebbare Kathode gegenübersteht. Um den Lichtbogen im Mittelpunkt des Ofens zu stabilisieren, werden vier Stromleiter unterhalb des Ofengefäßes von zwei gegenüberliegenden Seiten an die mittig gelagerte Anode angeführt, so daß deren Anschlüsse entweder gegenüberliegend oder wechselseitig gegenüberliegend genommen sind.

Schließlich soll in diesem Zusammenhang noch auf einen weiteren bekannten Gleichstrom-Lichtbogenofen (US 787,059) verwiesen werden, bei dem das Unterteil des Ofengefäßes zur Stromleitung zu den in der Mitte des Gleichstromofens befindlichen Anodensegmenten benutzt wird.

Von diesem bekannten Stand der Technik ausgehend, liegt der vorliegenden Erfindung für einen Gleichstrom-Lichtbogenofen der gattungsgemäßen Art die Aufgabe zugrunde, einen gleichmäßigen Feuerfestverschleiß der Ofenausmauerung durch Zentrierung des Lichtbogens in der Herdmitte auch dann sicherzustellen,wenn bei einseitiger Stromzu- und -ableitung die anodischen Stromzuleitungsrohre seitlich an den Ofen herangeführt sind, und zwar selbst bei hohen Strömen.

Die Lösung dieser Aufgabe wird erfindungsgemäß durch die im Patentanspruch 1 angegebenen Merkmale erreicht.

Vorteilhafte Ausgestaltungen und Weiterbildungen dieser Aufgabenlösung sind in den Unteransprüchen zusammengefaßt.

Der Verfahrensanspruch kennzeichnet die Verfahrensweise, mit der der so ausgestaltete Gleichstrom-Lichtbogenofen vorteilhaft betrieben werden kann.

Ausgegangen ist hier nicht von einer zentrischen Stromzuführung einer einzelnen Bodenelektrode, sondern vielmehr von einer Stromzuführung, die im Bodenbereich des 3ades flächig verteilt ist und die mit seitlich an die Ofenwandung herangeführten Stromzuleitern in Verbindung stehen. Hierfür sind im Untergefäß des Ofens vier Quadranten vorgesehen, denen jeweils eine Anschlußplatte seitlich auf dem Stahlgehäuse des Untergefäßes zugeordnet ist, wobei die Quadranten über das Ofengefäß leitfähig miteinander verbunden sind. Der anodenseitige Stromzufluß erfolgt somit über das Untergefäß von dessen seitlicher Außenwand zum Gefäßboden und von dort über Anodenbleche in der ff-Zustellung zur Schmelze. Bei dieser Art der Stromzuführung hat es sich überraschenderweise als besonders vorteilhaft herausgestellt, die Stromstärken in den Zuleitungen zu den unterschiedlichehen Quadranten so zu variieren, daß über Querströme im unteren Gefäßteil entstehende Magnetfelder und daraus resultierende Kräfte den Kräften entgegenwirken, die in den Stromschleifen über Zu- und Ableitung auftreten.

Besonders bei großen Strömen führt die am Lichtbogen erzeugte Ablenkung ansonsten zu spürbar vorzeitiger Abnutzung der Ausmauerung in den der Gleichrichter-Stromversorgung entfernt liegenden Quadranten.

Da das Maß der genannten Ablenkung nicht nur eine Funktion der durch den Gleichstromkreis fließenden Stromstärke, sondern ganz wesentlich auch des geometrischen Aufbaues der Stromschleife ist, spielt die Höhenlage der Ebene, in der sich die Zuleitungen zum Ofen befinden, eine bedeutende Rolle, und zwar in bezug auf die Höhe des Lichtbogens in der Ofenmitte. Eine vom Ofenboden her zentrische Zuführung des Stromes schirmt die um die Stromleiter sich aufbauenden magnetischen Felder nur sehr bedingt ab, während eine seitliche Stromzuführung hier ein wesentlich höheres Maß an Abschirmung bewirkt. Theoretisch könnte der Einfluß der Magnetfelder der Zuleitungen auf den Lichtbogen dadurch minimiert werden, daß diese in unmittelbarer Höhe des Lichtbogens liegen.

Erfindungsgemäß wird hier eine Optimierung dadurch gefunden, daß die Stromzuführungen seitlich nahe unterhalb des Lichtbogens in einer waagerechten Ebene an die Wandung des Untergefäßes herangeführt ist, d.h. daß hier eine mittige Stromzuführung über den Gefäßboden vermieden wird. Vorteilhaft erhält hierfür das Untergefäß für jeden Quadranten eine einzelne Stromzuleitung über eine zugehörige Anschlußplatte, wobei die Quadranten untereinander über die Gefäßwand elektrisch leitend verbunden sind.

Wesentlich für die vorliegende Erfindung ist, daß durch gezielte Veränderung der Stromstärke in den einzelnen Stromzuleitungen durch Querströme im Bodenbereich Zusatz-Magnetfelder erzeugt werden, die in Abstimmung mit der gezielten Abschirmung der Magnetfelder um die Zuleitungen durch die Jochwirkung der seitlichen Stahlwand des Untergefäßes zu einer kontrollierbaren Korrektur der Lichtbogenablenkung führen können.

In einigen Anwendungsfällen kann es auch vorteilhaft sein, nur zwei Stromzuführungen mit zwei Gleichrichtereinheiten oder mehr als vier Stromzuführungen zu mehr als vier Quadranten des Untergefäßes vorzusehen. Dabei ist stets darauf zu achten, daß die Auslegung der die Stromleiter versorgenden Gleichrichter entsprechend der eingestellten Unsymmetrien vorgenommen wird.

Verfahrensmäßig wird der Gleichstromofen stets so betrieben, daß die in den getrennten Stromzuführungen über das Untergefäß zur Bodenanode fließenden Ströme in Abhängigkeit von der Ablenkung des zwischen der Kathode und der Schmelze ausgebildeten Lichtbogens eingestellt werden. Besonders vorteilhaft ist es, die Auslenkung des Lichtbogens oberhalb der Schmelze zu ermitteln und die einzelnen Stromzuleitungen mit entsprechend unterschiedlichen Strömen in Übereinstimmung des jeweils ermittelten Wertes zu versorgen, so daß eine gezielte Kraft mit den hierfür erforderlichen zusätzlichen Magnetfeldern auf den Lichtbogen zu jedem Zeitpunkt des Ofenbetriebes ausgeübt werden kann.

Schließlich kann es für die Erfindung auch noch von Vorteil sein, daß die Führung des Lichtbogens in der Ofenmitte auch durch Änderung der Anordnung der Anodenbleche am Boden des Untergefäßes des Ofens veränderbar und zusätzlich optimierbar ist.

Die vorliegende Erfindung soll nachfolgend anhand der beiliegenden Zeichnungen, die vorteilhafte, aber nur beispielhafte Ausführungen wiedergeben, näher erläutert werden. Es zeigen:
- Fig. 1: einen Querschnitt durch einen Gleichstrom-Lichtbogenofen,
- Fig. 2: eine schematisierte Draufsicht auf den Schmelzofen mit einseitig angeordneter Gleichrichter-Stromversorgung und den Zuleitungs- und Ableitungsanschlüssen, und
- Fig. 3: eine Darstellung gemäß Fig. 2 in einer modifizierten Ausführungsform, ebenfalls mit Quadrantenangabe oben links.

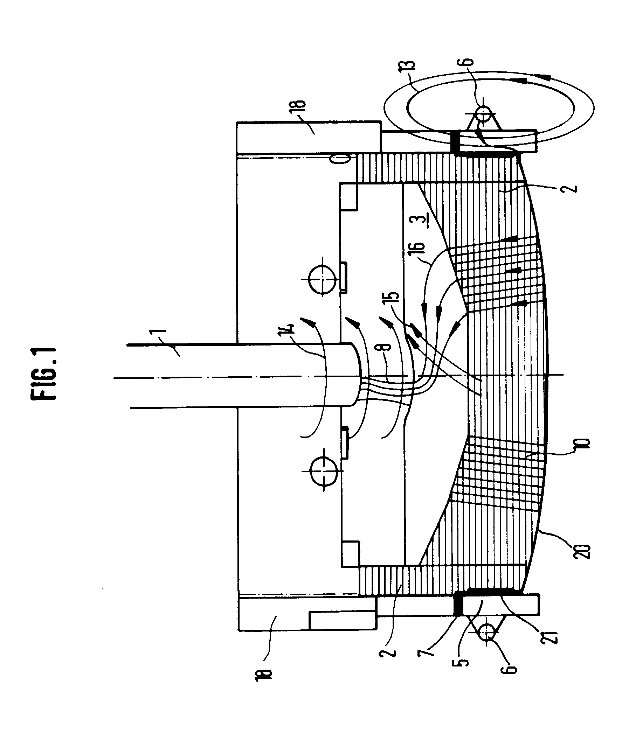

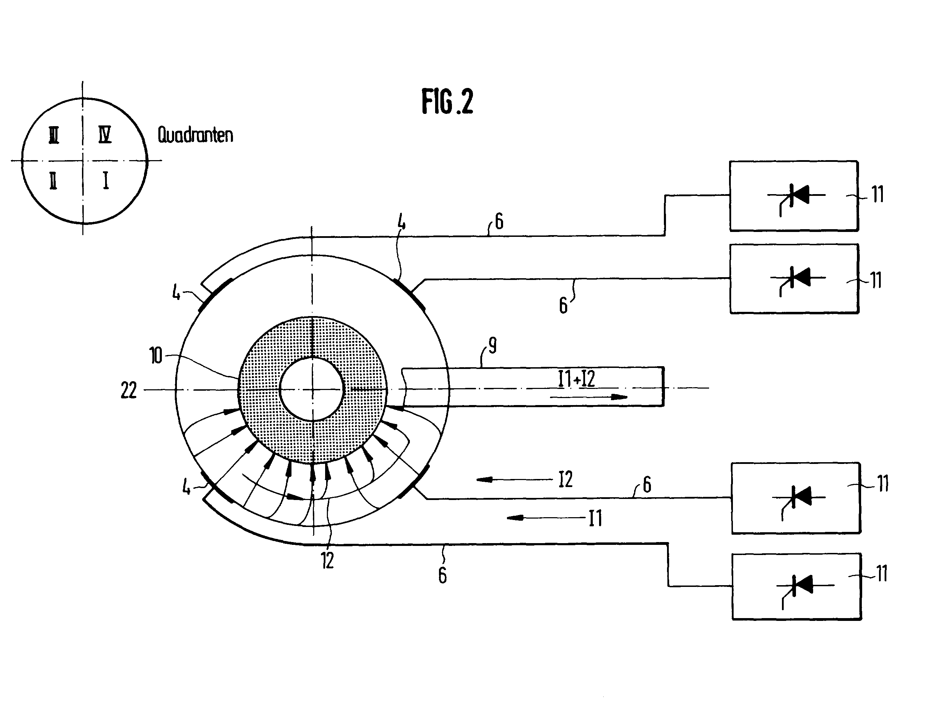

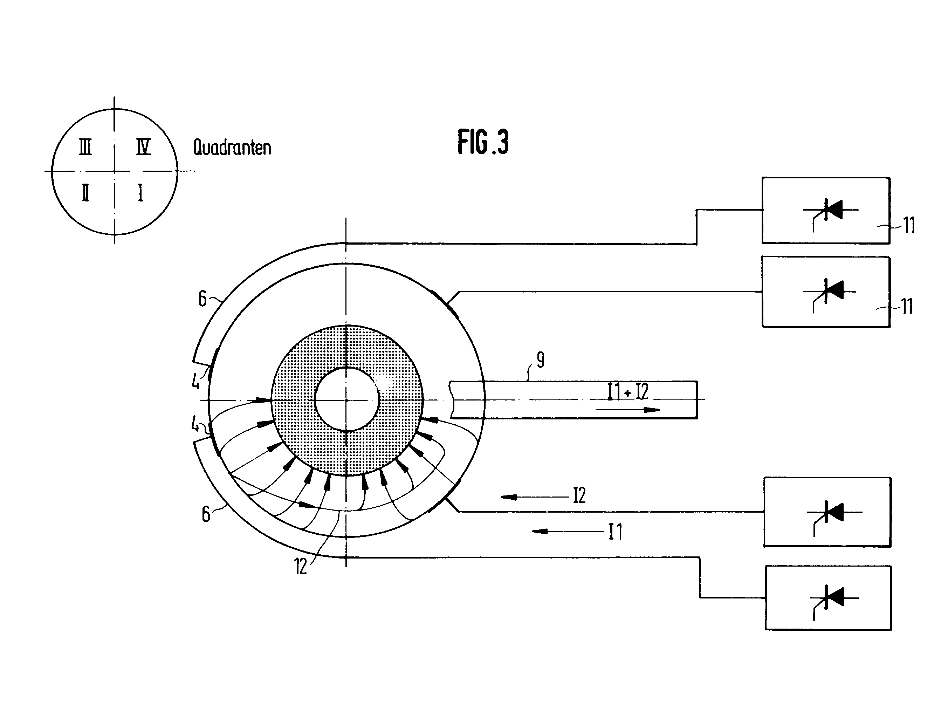

Wie aus Fig. 1 ersichtlich, besteht der Gleichstrom-Lichtbogenofen aus einem Untergefäß 5 und einem durch die Isolierung 7 hiervon elektrisch isolierten Obergefäß 18. Der Ofen ist in üblicher Weise mit einer ff-Zustellung 2 ausgekleidet, die die Schmelze 3 aufnimmt. Durch die Abdeckung ragt vertikal verschiebbar in die Ofenmitte eine Graphit-Elektrode, die die Kathode 1 für den Gleichstrom-Lichtbogen bildet und die von einem nicht dargestellten Elektroden-Tragarm 9 (Figuren 2, 3) gehalten ist.

Der Gefäßboden 20 des Untergefäßes 5 besteht wie dessen Außenwandung aus Stahlblech, das thermisch ausreichend isoliert ausgemauert ist, wobei der Stromfluß durch diese ff-Zustellung 2 mittels Anodenblechen 10 gleichmäßig in Form eines zentrischen Ringes über den Gefäßboden auf die Schmelze 3 verteilt ist. Das Stahlgefäß bildet die äußere leitfähige Metallschale, bestehend aus dem Gefäßboden 20 und der seitlichen Ofenwand 21, wobei diese, wie später noch ausgeführt werden wird, nicht nur bestimmend sind für die anodische Stromzuführung, sondern insbesondere auch für die Abschirmung der sich außerhalb des Ofens um die Stromzuführungen aufbauenden Magnetfelder 13. Die Stromzuführung 6 ist in Form von wassergekühlten Stromrohren um das Untergefäß 5 entlang der seitlichen Ofenwand 21 geführt. Der Lichtbogen 8 bildet sich zwischen der Oberfläche der Schmelze 3 und der Kathode 1 aus, wobei ein Teil der Stromflußlinien innerhalb der Schmelze 3 in Fig. 1 mit dem Bezugszeichen 16 bezeichnet ist.

Wie im Zusammenhang mit Fig. 2 ersichtlich, sind an der Ofenwand 21 des Untergefäßes 5 zu insgesamt vier Quadranten I bis IV jeweils Anschlußplatten 4 für vier Stromzuleitungen 6 vorgesehen, die in einer waagerechten Ebene unterhalb des Lichtbogens 8 zu der bzw. den Gleichrichter-Stromversorgungen 11 geführt sind. Der die Kathode 1 haltende Elektroden-Tragarm 9 liegt waagerecht in einer oberhalb des Ofens befindlichen Ebene und schließt die durch die Stromzuleitungen 6, die Anschlußplatten 4, die Gefäßwandungen 21, 20, die Anodenbleche 10, den Lichtbogen 8 und die Kathode 1 gebildete Stromschleife zu den Gleichrichter-Stromversorgungen 11.

Durch unterschiedliche Aufteilung der Stromstärken auf die vier Quadranten I bis IV, d.h. über die vier Zuleitungen 6 läßt sich die Lage bzw. die Auslenkung des Lichtbogens beeinflussen. Bei gleicher Stromaufteilung wird dieser zunächst infolge der Kraftwirkung senkrecht zu den Magnetfeldern der vorgegebenen Stromschleife in Richtung von den Gleichrichter-Stromversorgungen 11 weg ausgelenkt, was zu dem kannten erhöhten Abbrand der ff-Zustellung 2 insbesondere in den Quadranten II und III beim Stand der Technik geführt hat. Bei Vergrößerung der Stromstärke in den beiden Zuleitungen 6 zu den entfernt von den Gleichstromversorgungen 11 liegenden Anschlußplatten 4 in den Quadranten II und III ergibt sich ein in Fig. 2 mit der Pfeilführung 12 angedeuteter Ausgleichsstrom, mit der die genannte Lichtbogenauslenkung korrigierbar ist, d.h. wieder zentrisch zur Ofenachse geführt werden kann. Ursache für die genannten Ausgleichsströme ist der erhöhte Widerstand der anodischen Seite des Ofens im Vergleich zum geringen elektrischen Widerstand der Zuleitungen 6.

Die Ausgleichsströme 12 sind Ursache für die Erzeugung von zusätzlichen Magnetfeldern 15, die in Fig. 1 wiederum schematisch mit Pfeildarstellungen angedeutet sind und die eine Kraft auf den Lichtbogen ausüben, die der auslenkenden Kraft der Stromschleife entgegengesetzt gerichtet ist. Hierbei ist von Bedeutung, daß die gleichmäßige Strombelastung insbesondere der Anodenbleche 10 praktisch nicht verändert wird infolge des vorstehend genannten Widerstandsverhältnisses im Vergleich zum Widerstand des Gefäßbodens 20 bzw. der Wandung 21 des Untergefäßes 5, der zusammen mit demjenigen der Zuleitungen 6 gering gehalten werden kann.

Der sogenannte Fußkreis des Lichtbogens 8 läßt sich jedoch nicht nur durch die Vorgabe unterschiedlicher Stromstärken für die vier Quadranten I bis IV über die Zuleitungen 6 beeinflussen, sondern auch über die örtliche Zuordnung der Anschlußplatten 4 zu den jeweiligen Quadranten. Eine solche modifizierte Ausführungsform ist in Fig. 3 dargestellt. Dort ist die geometrische Anordnung der Anschlußplatten 4 so getroffen, daß in bezug auf eine gedachte mittlere Achse 22, die durch die Ofenmitte den Elektroden-Tragarm 9 zur Gleichrichter-Stromversorgung 11 führt, die Anschlußplatten 4 der äußeren Quadranten II, III auf diese Achse zu in Stellung gebracht sind entgegen der Anordnung von Fig. 2, bei der sich die Anschlußplatten 4 in den vier Quadranten jeweils diametral gegenüberliegen und damit im Winkel von jeweils 90° zueinander ausgerichtet sind.

Die Anordnung der Anschlußplatten kann einmalig bei Einrichtung des Ofens vorgenommen werden. Es ist jedoch auch denkbar, diese während des Betriebes des Ofens zu verändern, zumal sie an der äußeren Ofenwand 21 leicht zugänglich sind.

Die Einstellung unterschiedlicher Stromstärken über die Zuleitungen 6 wird über die Sollwertvorgabe für die Stromregler der Gleichrichter-Stromversorgungen 11 vorgenommen und kann je nach Bedarf stufenlos entsprechend verändertem Ofenbetrieb geändert werden. In jedem Fall werden die in den getrennten Stromzuführungen 6 über das Untergefäß 5 zur Bodenanode fließenden Ströme in Abhängigkeit von der Ablenkung des Lichtbogens 8 zwischen der Kathode 1 und der Oberfläche der Schmelze 3 so eingestellt, daß der Lichtbogen zentrisch zur Ofengeometrie gerichtet ist.

## Patentansprüche

1. Gleichstrom-Lichtbogenofen, bestehend aus einer die Schmelze (3) aufnehmenden Schmelzgefäß-Anordnung (5, 18) mit ff-Zustellung (2), einer senkrecht verschiebbar, in der Mitte der Abdeckung des Schmelzgefäßes gehaltenen kathodischen Elektrode (1) mit waagerecht geführtem Elektroden-Tragarm (9) und einer anodischen Bodenelektroden-Anordnung(4, 20, 21, 10) im Bereich eines von der Gefäßwandung zur Schmelze (3) hin elektrisch leitenden Untergefäßes (5), wobei der Stromzufluß und -abfluß einseitig über Leitungen (6, 9) zu einer im Abstand neben dem Ofen aufgestellten Gleichrichter-Stromversorgung (11) erfolgt,
**gekennzeichnet** durch die folgenden Merkmale:
a) das Untergefäß (5) ist in mehreren Quadranten (I bis IV) mit Stromzuleitungen (6) verbunden,
b) im Bereich jedes Quadranten ist an der Ofenwand (21) des Untergefäßes (5) eine Anschlußplatte (4) für die Stromzuführungen (6) vorgesehen,
c) die Stromzuführungen (6) sind nahe unterhalb des Lichtbogens (8) in einer waagerechten Ebene an die Gefäßwand herangeführt,
d) die Stromrückführung erfolgt über den waagerechten Elektroden-Tragarm (9),
e) die Stromstärke für die den Gleichrichter-Stromversorgungen (11) benachbart liegenden Quadranten (I, IV) des Untergefäßes (5) ist gegenüber derjenigen der Stromzuführungen zu den übrigen Quadranten (II, III) geringer bemessen.

2. Lichtbogenofen nach Anspruch 1,
dadurch gekennzeichnet, daß die Abstände der Abschlußplatten (4) für die Quadrantenbereiche (I bis IV) ungleich symmetrisch sind.

3. Lichtbogenofen nach Anspruch 2,
dadurch gekennzeichnet, daß die Anschlußplatten (4) in den von der Gleichrichter-Stromversorgung (11) entfernt liegenden Quadranten (II und III) zur Längsachse (22) der Ofen-/Gleichrichter-Anordnung hin verschoben sind.

4. Lichtbogenofen nach Anspruch 1,
dadurch gekennzeichnet, daß die Stromzuführungen (6) - eine zusätzliche Abschirmung der sich um sie aufbauenden Magnetfelder (13) durch den Stahlmantel des Untergefäßes (5) vorgebend - seitlich an die Ofenwand (21) des Untergefäßes (5) herangeführt sind.

5. Lichtbogenofen nach Anspruch 1,
dadurch gekennzeichnet, daß mindestens zwei Gleichrichter-Stromversorgungen (11) anodisch an das Untergefäß geführt sind.

6. Lichtbogenofen nach Anspruch 1,
dadurch gekennzeichnet, daß das Untergefäß (5) vom Obergefäß (18) elektrisch isoliert ist und zur Stromführung benutzt wird.

7. Lichtbogenofen nach einem der Ansprüche 1 bis 4,
dadurch gekennzeichnet, daß die Summe der Ströme durch die Stromzuführungen (6) zu den Quadranten (I und IV) benachbart zur Stromversorgung (11) kleiner ist als die Summe der Ströme durch die entfernt liegenden Stromzuführungen an die Quadranten (II und III).

8. Lichtbogenofen nach einem der Ansprüche 1 bis 7,
dadurch gekennzeichnet, daß die durch die Stromzuführungen (6) fließenden Einzelströme über die Sollwertvorgabe bei den Stromreglern der Gleichrichter-Stromversorgung (11) stufenlos einstellbar sind.

9. Lichtbogenofen nach einem der Ansprüche 1 bis 8,
dadurch gekennzeichnet, daß jeder Stromzuführung (6) eine Gleichrichter-Stromversorgung (11) zugeordnet ist, deren Auslegung so bemessen ist, daß sie der durch die erforderlichen Querströme (12) eingestellten Unsymmetrie entspricht.

10. Verfahren zum Betreiben eines Gleichstrom-Lichtbogenofens nach Anspruch 1,
dadurch gekennzeichnet, daß die in den getrennten Stromzuführungen (6) über das Untergefäß (5) zur Bodenanode (10, 20, 21) fließenden Ströme in Abhängigkeit von der Auslenkung des zwischen der mittigen oberen Kathode (1) und der Schmelze (3) ausgebildeten Lichtbogens (8) eingestellt werden derart, daß die Stromzuleitungen (6) mit unterschiedlichen Stromstärken beaufschlagt werden, die eine gezielte Kraft über hierdurch vorgebbare Zusatzmagnetfelder auf den Lichtbogen (8) ausüben.

## Claims

1. Direct current arc furnace, comprising a melting pot arrangement (5, 18) which receives the melt (3) with continuous delivery (2), a cathodic electrode (1) which is vertically displaceable and held in the centre of the cover of a melting pot with a horizontally guided electrode support arm (9) and an anodic base electrode arrangement (4, 20, 21, 10) in the area of a base pot (5) which conducts electrically from the pot wall to the melt (3), and the current delivery and discharge is carried out singlesidedly via cables (6, 9) to a rectifier current supply (11) set up at a distance alongside the furnace, **characterised by** the following features:
a) the base pot (5) is in a plurality of quadrants (I to IV) connected to current feeds (6);
b) in the area of each quadrant is provided on the furnace wall (21) of the base pot (5) a connecting plate (4) for the current feeds (6);
c) near and below the light arc (8), the current feeds (6) are taken in a horizontal plane to the pot wall;
d) The current feedback is carried out via the horizontal electrode support arm (9);
d) the strength of current for the quadrants (I, IV) of the base pot (5) adjacent the rectifier current supplies (11) is to be less than that of the current supplies to the other quadrants (II, III).

2. Light arc furnace according to Claim 1, **characterised in that** the gaps between the connecting plates (4) for the quadrant areas (I to IV) are asymmetric.

3. Light arc furnace according to Claim 2, **characterised in that** the connecting plates (4) in the quadrants (II and III) positioned remote from the rectifier current supply (11) are transposed toward the longitudinal axis (22) of the furnace/rectifier arrangement.

4. Light arc furnace according to Claim 1, **characterised in that** the current feeds (6), serving additional screening of magnetic fields (13) which develop around them by means of the steel casing of the base pot (5), are laterally taken to the furnace wall (21) of the base pot (5).

5. Light arc furnace according to Claim 1, **characterised in that** at least two rectifier current supplies (11) are anodically taken to the base pot.

6. Light arc furnace according to Claim 1, **characterised in that** the base pot (5) is electrically isolated from the top pot (18) and used to conduct a current.

7. Light arc furnace according to one of Claims 1 to 4, **characterised in that** the sum of currents through the current feeds (6) to the quadrants (I and IV) adjacent the current supply (11) is smaller than the sum of currents through remote current supplies to the quadrants (II and III).

8. Light arc furnace according to one of Claims 1 to 7, **characterised in that** individual currents flowing through the current feeds (6) are infinitely variable via a nominal value setting at current regulators of the rectifier current supply (11).

9. Light arc furnace according to one of Claims 1 to 8, **characterised in that** each current feed (6) is associated with a rectifier current supply (11), the design of which is such that it corresponds with a asymmetry set by required transverse currents (12).

10. Operating method for a direct current arc furnace according to Claim 1, **characterised in that** currents flowing in separated current feeds (6) via the base pot (5) to the base anode (10, 20, 21) are set in dependence on the control of the light arc (8) established between the central top cathode (1) and the melt (3) in such a manner that the current feeds (6) are charged with different strengths of current which exert an aimed load on the light arc (8) via thus offered additional magnetic fields.

## Revendications

1. Four à arc à courant continu composé d'un dispositif de creuset (5, 18) muni d'un garnissage réfractaire (2), qui contient le bain fondu (3), d'une électrode cathodique (1) mobile en translation verticale, tenue au centre du couvercle du creuset et munie d'un bras support d'électrode (9) dirigé horizontalement, et d'un ensemble d'électrodes de fond anodiques (4, 20, 21, 10) placé dans la région d'une cuve inférieure (5) conductrice de l'électricité, menant de la paroi de la cuve au bain fondu (3), l'amenée et le départ du courant s'effectuant unilatéralement, par l'intermédiaire de conducteurs (6, 9), sur une alimentation électrique à redresseurs (11) agencée à distance à côté du four, caractérisé par les caractéristiques suivantes :
a) la cuve inférieure (5) est connectée à des conducteurs d'amenée du courant (6) dans plusieurs quadrants (I à IV),
b) dans la région de chaque quadrant, est prévue, contre la paroi côté four (21) de la cuve inférieure (5), une plaque de connexion (4) pour les amenées de courant (6),
c) les amenées de courant (6) longent la paroi de la cuve à peu de distance au-dessous de l'arc (8), dans un plan horizontal,
d) le retour du courant s'effectue par l'intermédiaire du bras support d'électrode horizontal (9),
e) l'intensité du courant pour les quadrants (I, IV) de la cuve inférieure (5) qui sont rapprochés des alimentations électriques à redresseurs (11) est calculée plus faible que celle des amenées de courant menant aux autres quadrants (II, III).

2. Four à arc selon la revendication 1, caractérisé en ce aue les intervalles entre plaques de connexion (4) pour les quadrants (I à IV) sont symétriques et inégaux.

3. Four à arc selon la revendication 2, caractérisé en ce que les plaques de connexion (4) situées dans les quadrants (II et III) éloignés de l'alimentation électrique à redresseurs (11) sont déportées vers l'axe longitudinal (22) de l'ensemble four/redresseurs.

4. Four à arc selon la revendication 1, caractérisé en ce que les amenées de courant (6) longent latéralement la paroi côté four (21) de la cuve inférieure (5) - avec blindage additionnel des champs magnétiques (13) développés autour d'elles assuré par la jupe en acier de la cuve inférieure (5).

5. Four à arc selon la revendication 1, caractérisé en ce qu'au moins deux alimentations électriques à redresseurs (11) logent la cuve inférieure sur le côté anodique.

6. Four à arc selon la revendication 1, caractérisé en ce que la cuve inférieure (5) est isolée électriquement de la cuve supérieure (18) et est utilisée pour le passage du courant.

7. Four à arc selon une des revendications 1 à 4, caractérisé en ce que la somme des courants qui passent dans les amenées de courant (6) aboutissant aux quadrants (I et IV) rapprochés de l'alimentation électrique (11) est plus petite que la somme des courants qui passent dans les amenées de courant éloignées qui aboutissent aux quadrants (II et III).

8. Four à arc selon une des revendications 1 à 7, caractérisé en ce que les courants élémentaires qui passent dans les amenées de courant (6) peuvent être réglés par variation continue en affichant des valeurs de consigne sur les régulateurs de courant de l'alimentation électrique à redresseurs (11).

9. Four à arc selon une des revendications 1 à 8, caractérisé en ce qu'à chaque amenée de courant (6), est associée une alimentation électrique à redresseurs (11) dont la construction est calculée de manière à correspondre à la dissymétrie fixée par les courants transversaux nécessaires (12).

10. Procédé d'exploitation d'un four à arc à courant continu selon la revendication 1, caractérisé en ce que les courants qui passent dans les amenées de courant séparées (6) en traversant la cuve inférieure (5) pour aboutir à l'anode de fond (10, 20, 21) sont réglés en fonction de la déviation de l'arc (8) qui éclate entre la cathode supérieure centrale (1) et le bain fondu (3), de telle manière que les conducteurs d'amenée de courant (6) soient alimentés par des intensités électriques différentes qui exercent une force voulue sur l'arc (8), par l'intermédiaire de champs magnétiques additionnels dont la valeur peut être fixée par ce moyen.
